(19) Europäisches Patentamt
European Patent Office
Office européen des brevets

(11) **EP 2 315 382 B1**

(12) **EUROPÄISCHE PATENTSCHRIFT**

(45) Veröffentlichungstag und Bekanntmachung des Hinweises auf die Patenterteilung:
**03.07.2013 Patentblatt 2013/27**

(51) Int Cl.:
*H04L 1/00* (2006.01)    *H04B 1/715* (2011.01)
*H04B 1/713* (2011.01)

(21) Anmeldenummer: **10180516.6**

(22) Anmeldetag: **28.09.2010**

(54) **Verfahren zur Konfliktauflösung im Time-Hopping- oder Frequency-Hopping-Verfahren**

Method for conflict resolution in time-hopping or frequency-hopping methods

Procédé de suppression de conflit dans le procédé de saut temporel ou de saut de fréquence

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **23.10.2009 DE 102009050475**

(43) Veröffentlichungstag der Anmeldung:
**27.04.2011 Patentblatt 2011/17**

(73) Patentinhaber: **Deutsches Zentrum für Luft- und Raumfahrt e.V.**
**51147 Köln (DE)**

(72) Erfinder: **Liva, Gianluigi**
**81243, München (DE)**

(74) Vertreter: **von Kreisler Selting Werner**
**Deichmannhaus am Dom**
**Bahnhofsvorplatz 1**
**50667 Köln (DE)**

(56) Entgegenhaltungen:
- **ALEX W. LAM, DILIP V. SARWATE: "Time-Hopping and Frequency-Hopping Multiple-Access Packet Communications", IEEE TRANSACTINOS ON COMMUNICATIONS, Bd. 38, Nr. 6, 1. Juni 1990 (1990-06-01), Seiten 875-888, XP002671768,**
- **ENRICO CASINI ET AL: "Contention Resolution Diversity Slotted ALOHA (CRDSA): An Enhanced Random Access Schemefor Satellite Access Packet Networks", IEEE TRANSACTIONS ON WIRELESS COMMUNICATIONS, IEEE SERVICE CENTER, PISCATAWAY, NJ, US, Bd. 6, Nr. 4, 1. April 2007 (2007-04-01), Seiten 1408-1419, XP011177132, ISSN: 1536-1276, DOI: 10.1109/TWC.2007.348337**

**Beschreibung**

Die Erfindung betrifft ein Verfahren zum Übertragen von Daten an einen Zugangspunkt über einen Übertragungskanal, welchen sich mehrere Nutzer teilen.

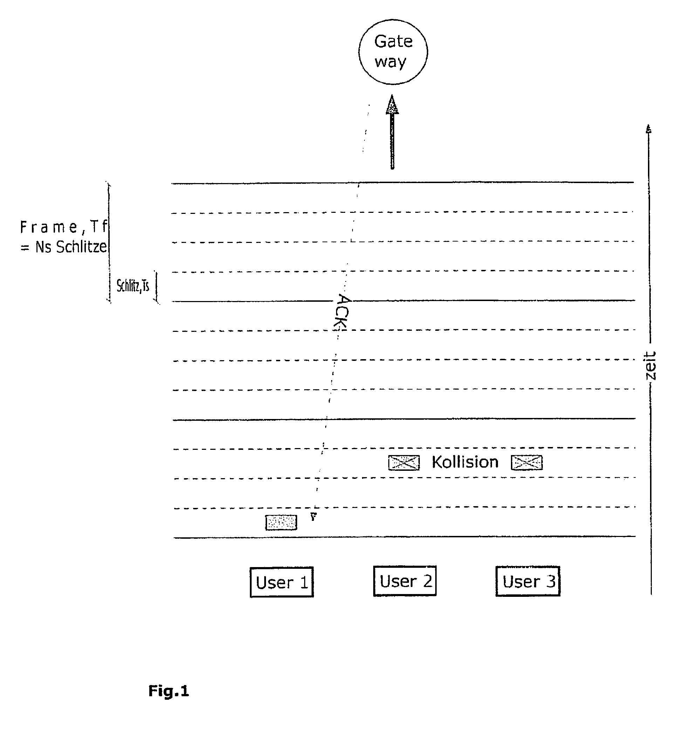

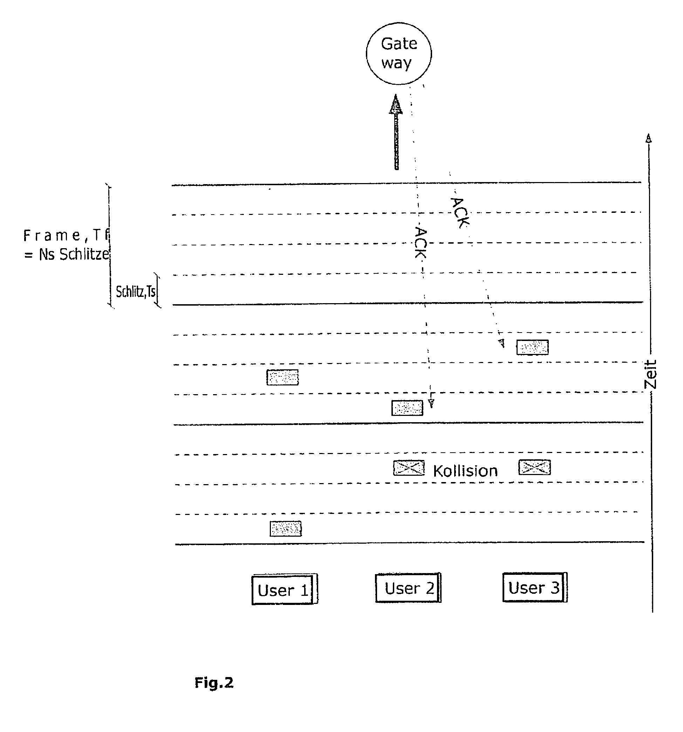

Ein bekanntes Verfahren für eine derartige Datenübertragung ist das "Contention Resolution Diversity Slotted ALOHA"-Verfahren (CRDSA). Dieses Verfahren könnte beispielsweise im Falle einer digitalen paketorientierten Uplink-Verbindung zahlreicher Bodenstationen zu einem Satelliten Verwendung finden. Wenn davon ausgegangen wird, dass zwischen den Nutzern keine Koordination besteht, d.h., die Nutzer können ihre Datenpakete auf der selben Trägerfrequenz und zum gleichen Zeitpunkt übertragen, und wenn ferner angenommen wird, dass kein Codemultiplex-Vielfachzugriff (Code Division Multiple Access (CDMA)) vorliegt, so ist es offensichtlich, dass von verschiedenen Nutzern gesendete Pakete auf dem Kommunikationsmedium kollidieren können, was bedeutet, dass sie untereinander Interferenzen verursachen. Das Slotted-ALOHA-Verfahren ist ein bekanntes Protokoll zur Verwaltung solcher unkoordinierter Multiple-Access-Verfahren. Bei dem Slotted-ALOHA-Verfahren wird der Zeitzugriff in Frames mit der Dauer Tf aufgeteilt. Jeder Frame ist zudem in Ns Schlitze mit der Dauer Ts=Tf/Ns unterteilt. Jeder Nutzer muss seine Paketübertragung auf einen Schlitz ausrichten, d.h., jeder Nutzer muss eine Synchronisierung mit der Frame-Struktur einhalten. Jeder Nutzer überträgt sodann Daten unabhängig von den anderen und wartet auf eine Bestätigung seitens des Gateways, bei welchem es sich um den gemeinsamen Zugangspunkt handelt. Wenn keine Bestätigung erhalten wird, was bedeutet, dass eine Kollision auf dem Kommunikationsmedium stattgefunden hat, überträgt der Nutzer sein Paket mit einer zufälligen Verzögerung erneut. Dieser Vorgang wird wiederholt, bis die Paketübertragung erfolgreich war. Das Konzept des Slotted-ALOHA-Verfahrens ist in den Figuren 1 und 2 dargestellt,

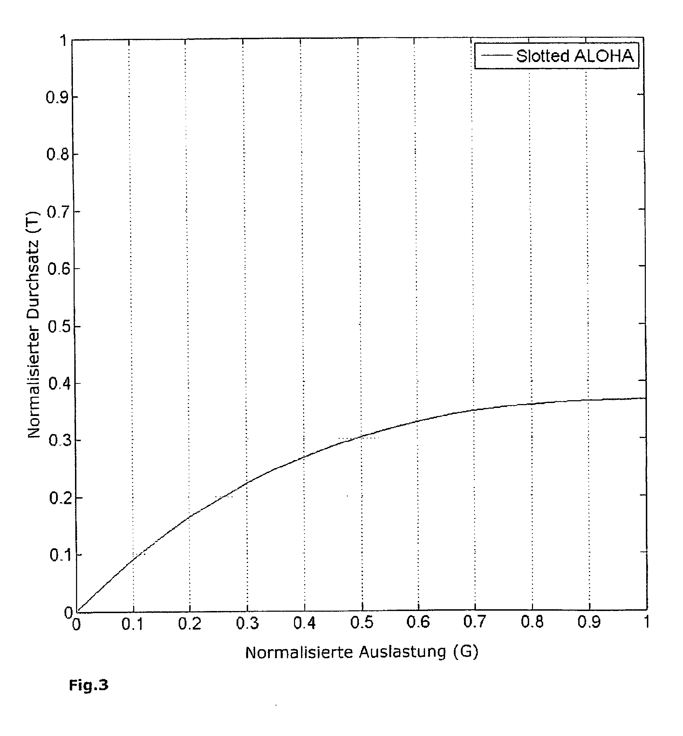

Der durch das Slotted-ALOHA-Verfahren erreichte Durchsatz wird als $T(G) = Ge^{-G}$ definiert, wobei mit T der normalisierte Durchsatz als die durchschnittliche Anzahl der Pakete, welche in einem Schlitz eine erfolgreiche Übertragung erreichen, bezeichnet wird und G der normalisierte angebotene Verkehr ist, d.h. die durchschnittliche Anzahl der pro Schlitz gesendeten Pakete. Der Spitzendurchsatz wird bei dem Slotted-ALOHA-Verfahren bei G=1 erreicht, wobei T = 0,3679. Dies bedeutet, dass wenn G=1 ist, der Anteil an Paketen, der in einem Übertragungsversuch erfolgreich übertragen wird, bei ungefähr 36% liegt. G ist als G= m/n definiert, wobei m die Anzahl der Paketübertragungsversuche pro Frame und n die Anzahl der Schlitze pro Frame bezeichnet. Der in Abhängigkeit von dem angebotenen Verkehr G durch das Slotted-ALOHA-Verfahren erreichbare Durchsatz ist in Figur 3 dargestellt.

Als eine Verbesserung des Slotted-ALOHA-Verfahrens wurde das CRDSA (Contention Resolution Diversity Slotted ALOHA)-Verfahren entwickelt. Hierbei überträgt jeder Nutzer zwei Kopien des selben Pakets innerhalb eines Frames in zwei zufällig gewählten Schlitzen. Ein Adressenverweis auf die Position des Zwillingspakets ist in den Header jedes Pakets geschrieben. Wird ein Paket ohne Kollision von dem Gateway oder dem Zugangspunkt empfangen, kann der Adressenverweis aus dem Header extrahiert und von dem Gateway dazu verwendet werden, festzustellen, wo sich das Zwillingspaket in der Frame-Struktur befindet. Sollte das Zwillingspaket mit einem anderen Paket kollidiert sein, so wird ein Interference-Cancellation-Verfahren mit den folgenden Schritten durchgeführt:

- Die Wellenformdarstellung des Zwillingspakets wird im Gateway rekonstruiert, indem das korrekt empfangene Paket decodiert, wieder codiert und moduliert wird.

- Die derart erhaltene Wellenform wird von dem empfangenen Signal innerhalb des Zeitfensters der Zwillingskopie subtrahiert. Dies ist gleichbedeutend mit einer Auslöschung der durch die Kollision des Zwillingspakets mit dem Paket in dem selben Schlitz verursachten Interferenz.

- Das Kollisionspaket in diesem Schlitz kann nun decodiert werden.

- Der Vorgang kann wiederholt werden, so dass die Wiederherstellung des Kollisionspakets einen Adressenverweis auf das Zwillingspaket des Kollisionspakets liefert. Durch die Nutzung dieses Kaskadeneffekts können zahlreiche Pakete durch dieses Interference-Cancellation-Verfahren wiederhergestellt werden.

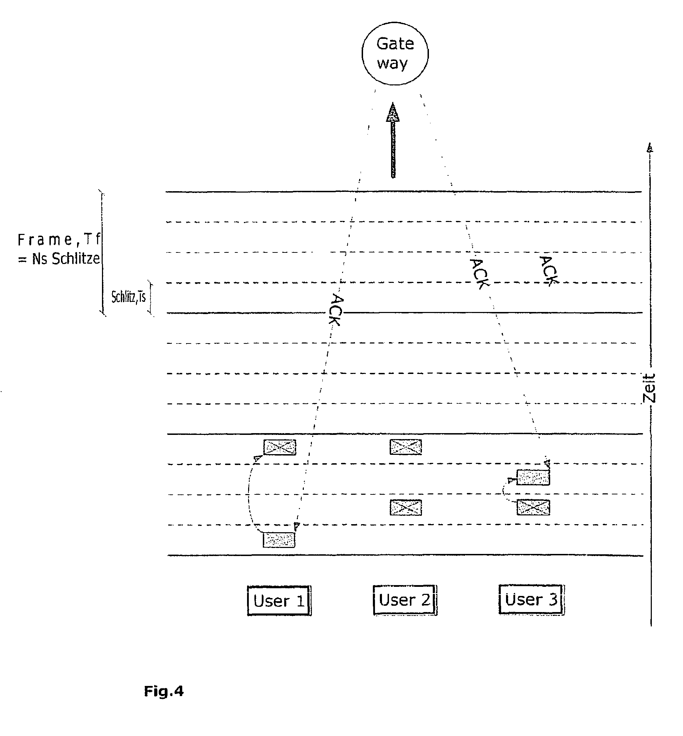

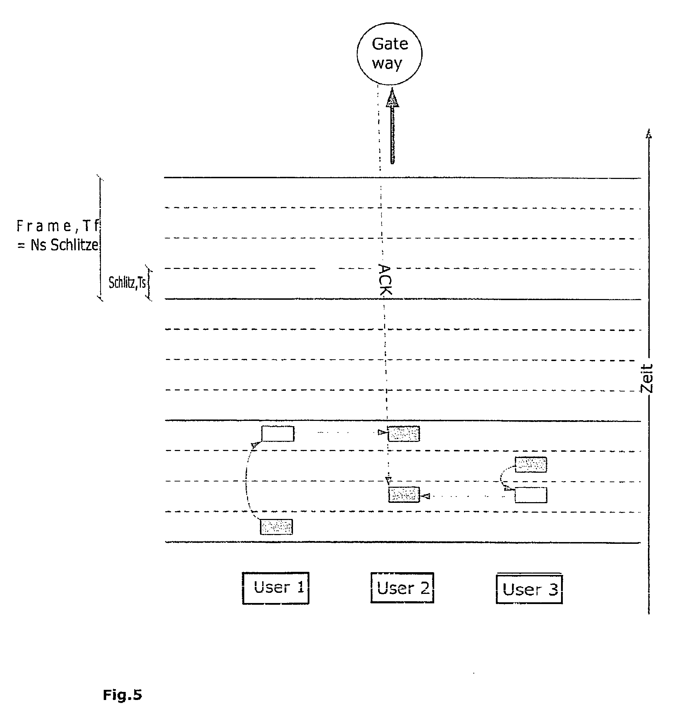

Dieser Vorgang ist in den Figuren 4 und 5 dargestellt, wobei Figur 4 zeigt, dass der Nutzer 1 zwei Kopien eines Pakets sendet. Eine Kopie führt zu einer Kollision, während die andere von dem Gateway korrekt empfangen wird, welches die entsprechende Bestätigung schickt. Das Gleiche gilt für die von dem Nutzer 3 gesendeten Pakete. Beide Pakete, welche der Nutzer 2 gesendet hat, sind aufgrund von Kollisionen verlorengegangen. Wie in Figur 5 dargestellt, ist die Interferenz, welche das von dem Nutzer 1 auf das Paket des Nutzers 2 im vierten Zeitfenster ausübt, ausgelöscht. Dies ermöglicht die Wiedergewinnung des Pakets des Nutzers 2. Alternativ kann die Interferenz, welche der Nutzer 3 dem Nutzer 2 verursacht, durch eine zuvor beschriebene Subtraktion ausgelöscht werden.

Es sei darauf hingewiesen, dass das durchschnittliche CRDSA für einen gegebenen Wert von G mehr Übertragungsleistung verwendet als das Slotted ALOHA. Tatsächlich wird beim CRDSA ein Paket zweimal repliziert, was zu einer Verdoppelung der durchschnittlichen Leistung führt. Es wird daher eine Zahl eingeführt, um den Leistungsmehraufwand in bezug auf Slotted ALOHA zu messen, nämlich

$$DP = 10*\log 10(P\_CRDSA/P\_SA)\ dB,$$

DP liefert somit einen Zahlenwert darüber, wie viel Leistung von CRDSA in bezug auf Slotted ALOHA zusätzlich verbraucht wird.

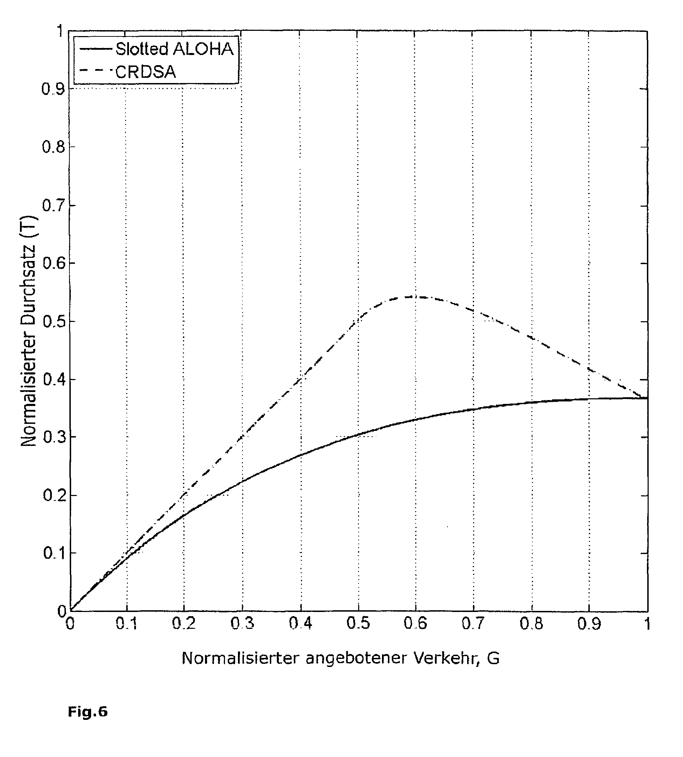

Simulationsergebnisse, welche in "E. Casini, R.D. Gaudenzi, und O.D.R.Herrero, -Contention resolution diversity slotted aloha (crdsa): An enhanced random access scheme for satellite access packet networks.- IEEE Transactions on Wireless Communications, vol. 6, S. 1408-1419, April 2007" angeführt sind, zeigen, daß beinahe im gesamten Bereich $G \in [0,1]$ das CRDSA-Verfahren einen höheren Durchsatz liefert, wobei die Spitze bei $T \simeq 0,55$ für $G \simeq 0,65$ liegt. Dies ist in Figur 6 dargestellt. Wie ferner ersichtlich ist die Grenze bis zu welcher der normalisierte Durchsatz nahezu linear ist, von $G = 0,1$ für Slotted ALOHA auf $G = 0,4$ für CRDSA erweitert, was bedeutet, dass bei Auslastungen von weniger als G = 0,4 nahezu sämtliche Übertragungsversuche erfolgreich sind.

Ferner wurde eine andere Art der Verbesserung, die als "Time-Hopping Multiple Access (THMA)" bezeichnet wird, in A. W. Lam und D. V. Sarwate "Time-Hopping and Frequency-Hopping Multiple-Access Packet Communications", IEEE Transactions on Communications, vol. 38, no. 6, S.. 875-888, Juni 1990 vorgeschlagen. Bei der Verwendung von THMA wird jeder Burst in k Unterpakete (im Folgenden "Einheiten" genannt) aufgeteilt. Die k Einheiten werden somit mittels eines (n,k) linearen Blockcode auf Paket-Level codiert, woraus sich n>k Einheiten ergeben. Der Multiple-Access-Frame (MAC) ist dementsprechend in NCSA=k*NSA Schlitze mit einer jeweiligen Dauer von T_{CSA}= T{SA}/k eingeteilt. Die zu jedem Burst gehörenden n Einheiten werden sodann nach einem Time-Hopping-Muster in n verschiedenen Schlitzen (innerhalb eines MAC-Rahmens) gesendet. Das Time-Hopping-Muster kann zufällig gewählt sein, beispielsweise gemäß einem Pseudozufallszahlengenerator. Das Muster kann dadurch signalisiert werden dass in jede Einheit ein kleiner Header eingebettet wird, welcher den Generator-Startwert enthält. Empfangsseitig werden kollidierende Einheiten als verlustig erklärt. Bezogen auf einen spezifischen Nutzer bedeutet dies: wenn e Einheiten verloren wurden und e<=n-k, stellt der Codierer auf Paket-Level diese wieder her. Dieser Ansatz, welcher in A. W. Lam und D. V. Sarwate "Time-Hopping and Frequency-Hopping Multiple-Access Packet Communications", IEEE Transactions on Communications, vol. 38, no. 6, S. 875-888, Juni 1990 diskutiert wird, ermöglicht das Erreichen eines in bezug auf SA höheren Durchsatzes, wenn der angebotene Verkehr mäßig gering ist.

Die Druckschrift 'ENRICO CASINI ET AL: "Contention Resolution Diversity Slotted ALOHA (CRSDSA): An Enhanced Random Access Scheme for Satellite Access Packet Networks", IEEE TRANSACTIONS ON WIRELESS COMMUNICATIONS, IEEE SERVICE CENTER; PISCATAWAY, NJ, US, Bd. 6 Nr. 4, 1. April 2007 (2007-04-01), Seiten 1408-1419, XP011177132, ISSN: 1536-1276, DOI: 10.1109/TWC.2007.348337' beschreibt ein CRDSA-Verfahren, das in einem Multiple-Access scheme verwendet wird. In der genannten Druckschrift wird gezeigt, dass die Performance von CRDSA der Performance von Slotted-ALOHA überlegen ist.

Es ist die Aufgabe der vorliegenden Erfindung, den Durchsatz und/oder den durchschnittlichen Leistungsmehraufwand DP bei einem Datenübertragungsverfahren zu verbessern, wobei ein Übertragungskanal zu einem Zugangspunkt von mehreren Nutzern gemeinsam genutzt wird.

Die Aufgabe wird mit den Merkmalen des Anspruchs 1 gelöst.

Bei einem Verfahren zur Datenübertragung wird ein gemeinsamer Übertragungskanal zu einem Zugangspunkt von mehreren Nutzern gleichzeitig genutzt. Die Daten werden unter Verwendung eines in logische Schlitze unterteilten Multiple-Access-Frames übertragen. Dies können Zeitfenster oder Frequenzfenster oder eine Kombination aus beiden sein. Das erfindungsgemäße Verfahren weist die folgenden Schritte auf: jedes Datenpaket wird in k Einheiten aufgeteilt. Ein Datenpaket kann auch als "Burst" bezeichnet werden. Die k Einheiten werden mittels eines (n,k) Decodierers codiert, wodurch n-k redundante Einheiten produziert werden. Die n Einheiten werden in einem Multiple-Access-Frame in n verschiedenen Schlitzen entsprechend einem Time-Hopping-Muster, einem Frequency-Hopping-Muster oder einer Kombination aus beiden übertragen. Dadurch werden die Positionen der n Einheiten, welche ein Datenpaket bilden, in einen an jede Einheit angehängten Header geschrieben.

Verlorene oder beschädigte Datenpakete auf der Empfängerseite werden durch die Verwendung redundanter Einheiten wiederhergestellt. Hierbei werden die folgenden Verfahrensschritte durchgeführt: Für jeden Schlitz wird das Vorhandensein einer Einheit geprüft. Falls eine Einheit in einem Schlitz vorhanden ist und ohne Kollisionen übertragen wurde, wird diese Einheit wiederhergestellt. Diese wiederhergestellte Einheit mit ihrem Header wird zusammen mit einem Index des Schlitzes, in dem sie wiederhergestellt wurden, in einem Speicher gespeichert. Wenn eine ausreichende Anzahl von k+$\delta$ Einheiten, welche ein Datenpaket bilden, wiederhergestellt wurde, wird der Paket-Level-Decodierer verwendet, um die verbleibenden n-k-$\delta$ Einheiten, welche in den jeweiligen Schlitzen Kollisionen erfahren haben, wiederherzustellen. Hierbei ist $\delta$ eine kleine, üblicherweise als "Overhead" bezeichnete Zahl, welche im Idealfall gleich 0 sein sollte.

Nach dem erfindungsgemäßen Verfahren wird die Interferenz, welche die n-k-$\delta$ Einheiten aus den Schlitzen, in welchen sie übertragen wurden, verursacht haben, unter Verwendung der Informationen über die Position der Einheiten entfernt, welche in den Headern der wiedergewonnenen k+$\delta$ Einheiten enthalten sind. Anschließend können Einheiten anderer Datenpakete, welche eine Kollision mit den n-k-$\delta$ Einheiten erfahren haben, wiederhergestellt werden.

Das erfindungsgemäße Verfahren ermöglicht

a) im Vergleich mit den aus dem Stand der Technik bekannten Verfahren, eine Verbesserung des Durchsatzes bei einem bestimmten durchschnittlichen Leistungsmehraufwand DP;

b) eine Verringerung des durchschnittlichen Leistungsmehraufwandes DP, wobei gleichzeitig ein Durchsatz erreicht wird, welcher mit demjenigen der aus dem Stand der Technik bekannten Verfahren vergleichbar ist.

Vorzugsweise werden die Interference-Cancellation-Schritte iterativ durchgeführt, so dass beim Säubern eines Schlitzes Einheiten anderer Datenpakete widerhergestellt werden können. Diese Einheiten werden verwendet, um andere Einheiten wiederherzustellen, welche zu dem selben Datenpaket gehören, dessen Interferenz aus dem jeweiligen Schlitz entfernt werden kann. Auf diese Weise können weitere Schlitze gesäubert werden, so dass die Interference-Cancellation-Schritte fortgeführt werden können.

Die Einheiten und die Header können vor der Übertragung durch einen Bitübertragungsschicht-Fehlerkorrekturcode geschützt werden.

Das Codieren der k Einheiten kann unter Verwendung eines binären linearen Blockcodes durchgeführt werden, insbesondere eines Hamming-Codes, eines BCH-Codes, eines Reed-Muller-Codes, oder unter Verwendung eines Reed-Solomon-Codes.

Vorzugsweise wird ein (4,2) Code oder ein (6,4) Code für das Codieren der k Einheiten verwendet. Der Multiple-Access-Frame kann beispielsweise in 100 oder 400 Schlitze unterteilt werden.

Bevorzugte Ausführungsbeispiele der Erfindung werden in Zusammenhang mit den nachfolgenden Figuren beschrieben.

Es zeigen:

Fign. 1 und 2    den Ablauf nach dem Slotted-ALOHA-Verfahren gemäß dem Stand der Technik,

Fig. 3    den Durchsatz T bei dem Slotted-ALOHA-Verfahren,

Fign. 4 und 5    den Ablauf nach dem CRDSA-Verfahren gemäß dem Stand der Technik,

Fig. 6    den Durchsatz T des CRDSA-Verfahrens im Vergleich mit dem Durchsatz T des Slotted-ALOHA-Verfahrens,

Fig. 7    den Ablauf eines Ausführungsbeispiels des erfindungsgemäßen Verfahrens,

Fig. 8    einen Vergleich des Durchsatzes für das Slotted-ALOHA- Verfahren, das THMA-Verfahren und das erfindungsgemäße Verfahren,

Fig. 9    einen Vergleich der Schwellenwerte G*, welche dem maximalen erreichbaren Durchsatz der verschiedenen Verfahren entsprechen, für unterschiedliche (n,k) Codes gegenüber dem durchschnittlichen Leistungsmehraufwand, und

Fig. 10    ein Beispiel für eine Aufteilung eines MAC-Frames in Zeit- und Frequenzschlitze.

Die Fign. 1 bis 6 wurden im Zusammenhang mit dem Stand der Technik beschrieben.

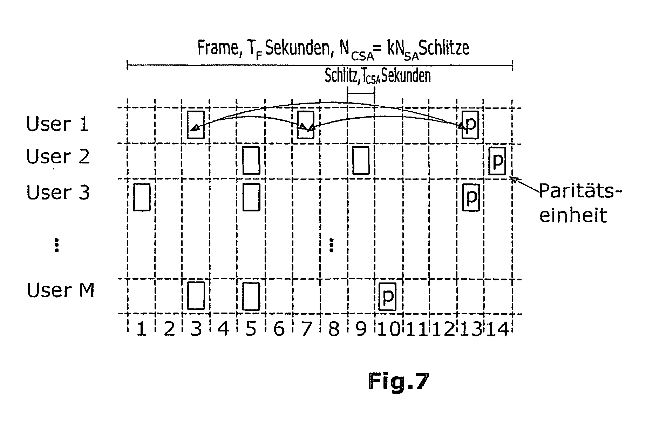

Wie in Fig. 7 dargestellt, arbeitet das erfindungsgemäße Verfahren auf der Senderseite wie folgt: Jedes Paket wird in k Einheiten aufgeteilt. Wird angenommen, dass jedes Paket aus L Bits besteht, so besteht jede Einheit aus u=L/k Bits (vorausgesetzt, dass L durch k teilbar ist).

Die k Einheiten werden in einen (n,k) Codierer eingegeben, wodurch n-k redundante Einheiten erzeugt werden. Diese Codierung kann beispielsweise unter Verwendung eines binären linearen Blockcodes erfolgen. Werden in einem solchen Fall die k Dateneinheiten mit $d_0, d_1, ... , d_{k-1}$ bezeichnet, werden die n-k redundanten Einheiten $p_0, p_1, ... , p_{n-k-1}$ als lineare Kombinationen der k Dateneinheiten erhalten, beispielsweise $p_1=g_{1,0} d_0 + g_{i,1} d_1 + g_{i,2} d_2 + g_{i,3} d_3 + ... + g_{i,k-1} d_{k-1}$, wobei der Koeffizient g_i,j ein Element eines Galoisfeldes GF(2^p), ist, und wobei die Operationen Symbol für Symbol (wobei ein Symbol aus Bits gebildet ist) für sämtliche (u/p) Symbole durchgeführt werden, welche die Einheiten bilden. In dem spezifischen Fall von p=1 wird ein binärer linearer Blockcode verwendet, und g_i,j ist entweder gleich 0 oder 1, und die Operationen werden bitweise durchgeführt.

Die n Einheiten werden sodann innerhalb eines MAC-Frames übertragen, wobei die Schlitze entsprechend einer gleichmäßigen Verteilung gewählt werden. Die Positionen der einen Burst bildenden n Einheiten sind in einem Ad-hoc-Header angegeben, welcher an jede Einheit angehängt wird. Die Einheiten und der Header werden vor der Übertragung durch einen Bitübertragungsschicht-Fehlerkorrekturcode geschützt.

Auf der Empfängerseite erfolgt für jeden Schlitz eine Prüfung auf das Vorhandensein einer Einheit. Wird eine Einheit erkannt, wird ein Decodierversuch durchgeführt. Wenn in dem Schlitz nur eine Einheit vorhanden ist (d.h. keine Kollisionen vorliegen), kann die Bitübertragungsschichtdecodierung erfolgreich ablaufen. Sobald die Einheit und ihr Header wiederhergestellt wurden, werden sie zusammen mit dem Index des Schlitzes, in welchem sie wiederhergestellt wurden in einem Speicher abgelegt. Wenn eine ausreichende Anzahl $k+\delta$ von Einheiten, welche einen Burst bilden, wiederhergestellt wurde (wobei bei Verwendung eines MDS-Codes als Reed-Solomon-Code diese Anzahl k entspricht), kann der Paket-Level-Decodierer eingesetzt werden, um die verbleibenden $n-k-\delta$ Einheiten (welche in den jeweiligen Schlitzen Kollisionen erfahren haben) zu rekonstruieren.

Zu diesem Zeitpunkt ist es möglich, die durch die $n-k-\delta$ Einheiten verursachte Interferenz aus dem Schlitzen, in welchen sie übertragen wurden, zu entfernen (diese Information ist in dem Header enthalten, welcher an jede Einheit angefügt ist und somit zusammen mit den empfangenen $k-\delta$ Einheiten wiedergewonnen wurde). Die Interference Cancellation (IC) kann somit die Wiederherstellung weiterer Einheiten anderer Bursts ermöglichen und der Vorgang kann iterativ ablaufen (IC ermöglicht das Säubern von Schlitzen und das Wiederherstellen von anderen Einheiten, welche die Wiederherstellung weiterer Einheiten ermöglichen kann, deren Interferenzen entfernt werden können, und so weiter).

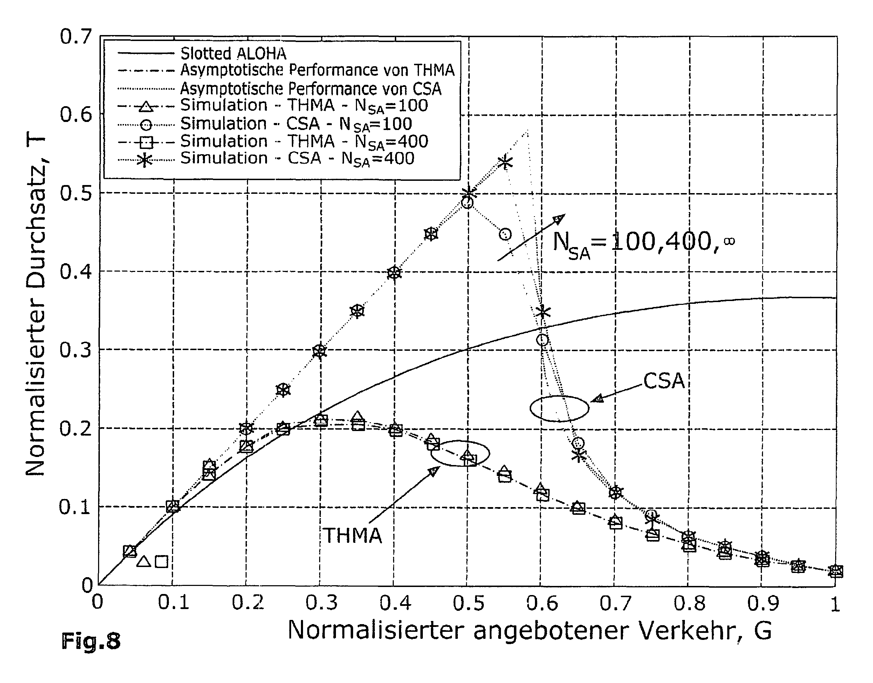

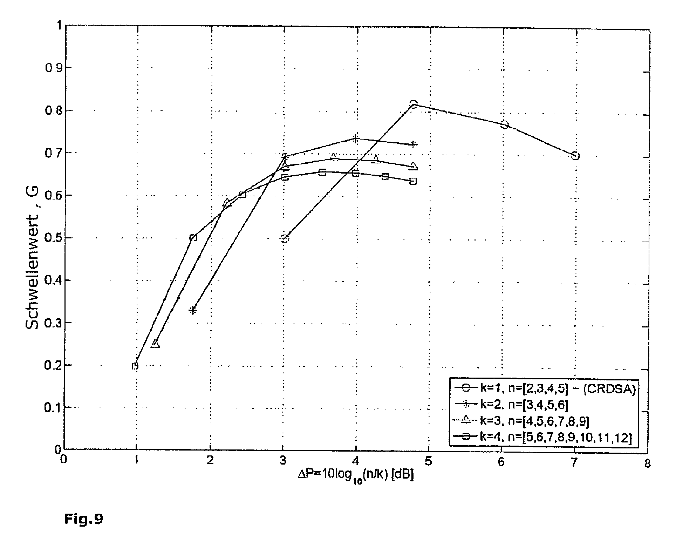

In Fig. 8 ist der Durchsatz verschiedener Slotted-ALOHA-Verfahren als Ergebnis einer Simulationsreihe dargestellt. Das Szenario berücksichtig Frames, die in Ns=100 Schlitze und 400 Schlitze unterteilt sind. In dem Diagramm beziehen sich die Kurven auf Slotted-ALOHA, das in der vorliegenden Erfindung vorgeschlagene Verfahren, wobei n=7 und k=4, und THMA, bei dem n=7 und k=4. Es sei darauf hingewiesen, dass der durchschnittliche Leistungsmehraufwand DP für die vorgeschlagene Erfindung als DP=10*log10(n/k) dB berechnet werden kann. Gemäß Figur 9 wird ein Durchsatz nahe 0,55 mit einem Leistungsmehraufwand DP = 2,4 dB erreicht, während CRDSA diesen Durchsatz mit DP = 3dB erreicht. Somit spart die vorgeschlagene Erfindung (in diesem spezifischen Fall) 0,6 dB Leistung.

Die drei vorgeschlagenen Wahrscheinlichkeitsverteilungen liefern Durchsatzspitzen nahe 0,55 und das Verhältnis zwischen Durchsatz und Verkehr ist bis zu einem Verkehr nahe 0,5 beinahe linear, was bedeutet, dass selbst bei einer Auslastung des Systems von 50% die Wahrscheinlichkeit eines Übertragungserfolgs für jeden Nutzer nahezu gleich 1 ist.

Fig. 9 zeigt die Werte des angebotenen Verkehrs, bis zu welchen die Paketverlustwahrscheinlichkeit vernachlässigbar ist (G^*), und zwar für CRDSA und für das vorgeschlagene CSA. Die Schwellenwerte sind als Funktion des durchschnittlichen Leistungsinkrements in bezug auf SA angegeben (als durchschnittlicher Leistungsmehraufwand bezeichnet), welche als DP=10*log_{10} (n/k) ausgedrückt wird. Berücksichtigt man Codes mit einer Rate von n/k=2, was zu einem Mehraufwand von 3 dB führt, ist festzustellen, dass der beste Schwellenwert durch das auf einem (4,2) Code basierende CSA-Verfahren erreicht wird, wobei G^*=0,692. Ein Repetition-2-CRDSA würde einen erheblich niedrigeren Schwellenwert von G^*=0,5 liefern. Es sei ferner darauf hingewiesen, dass der selbe Schwellenwert G^*=0,5 unter Verwendung eines CSA mit einem (6,4) Code erreicht werden kann, so dass mehr als 1,2 dB an durchschnittlicher Leistung eingespart werden.

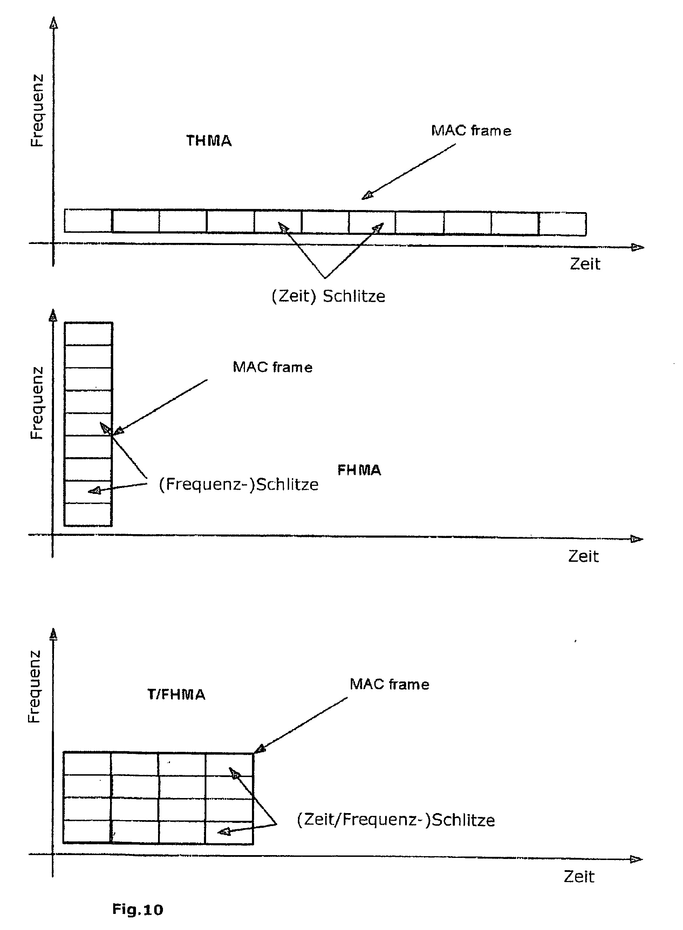

Ein schematisches Beispiel, das verdeutlicht, wie ein MAC-Frame in unterschiedliche Schlitze im Zeit- und/ oder Frequenzbereich aufgeteilt werden kann, ist in Fig. 10 dargestellt. Das erfindungsgemäße Verfahren kann sowohl in einem THMA-, als auch in einem FHMA-Verfahren Verwendung finden. Das erfindungsgemäße Verfahren kann in allen Arten kommerzieller drahtlose und drahtgebundener Kommunikationssysteme Verwendung finden. Der Gedanke, welcher der Erfindung zugrunde liegt, ist von besonderem Interesse für interaktive Satellitendienste wie DVB-RCS.

## Patentansprüche

1. Verfahren zur Datenübertragung, bei welchem ein Übertragungskanal zu einem Zugangspunkt von mehreren Nutzern gemeinsam genutzt wird,
   wobei die Daten unter Verwendung eines in logische Schlitze aufgeteilten Multiple-Access-Frames übertragen werden, wobei das Verfahren die folgenden Schritte aufweist:

   - Aufteilen jedes Datenpakets in k Einheiten,
   - Codieren der k Einheiten mittels eines (n,k) linearen Blockcodierers, wodurch n-k redundante Einheiten erzeugt werden,

- Übertragen der n Einheiten innerhalb eines Multiple-Access-Frames in n verschiedenen Schlitzen entsprechend eines Time-Hopping-Musters, eines Frequency-Hopping-Musters oder einer Kombination derselben,
- Wiederherstellen verlorener oder beschädigter Datenpakete auf Seiten des Empfängers unter Verwendung der redundanten Einheiten, indem die folgenden Schritte durchgeführt werden:

- Feststellen des Vorhandenseins einer Einheit für jeden Schlitz,
- falls eine Einheit in einem Schlitz vorhanden ist und ohne Kollisionen übertragen wurde, Wiederherstellen dieser Einheit,
- wenn eine ausreichende Anzahl k+$\delta$ Einheiten, die ein Datenpaket bilden, wiedergewonnen wurde, Verwenden eines Paket-Level-Decodierers zum Wiederherstellen der verbleibenden n-k-$\delta$ Einheiten, die in den jeweiligen Schlitzen Kollisionen erfahren haben,

wobei das Verfahren ferner die folgenden Schritte aufweist:

- Entfernen der durch die n-k-$\delta$ Einheiten verursachten Interferenzen aus den Schlitzen, in welchen sie übertragen wurden, und
- Wiederherstellen von Einheiten anderer Datenpakete, welche eine Kollision mit den n-k-$\delta$ Einheiten erfahren haben,

**dadurch gekennzeichnet, dass**

- die Positionen der n Einheiten, welche ein Datenpaket bilden, in einen an jede Einheit angefügten Header geschrieben werden,
- eine wiederhergestellte Einheit und ihr Header in einem Speicher zusammen mit einem Index des Schlitzes, in welchem sie wiederhergestellt wurden, gespeichert wurden, und
- das Entfernen der durch die n-k-$\delta$ Einheiten verursachten Interferenzen unter Verwendung der Informationen über die Positionen der Einheiten, welche in dem Header der wiederhergestellten k+$\delta$ Einheiten enthalten sind, erfolgt.

2. Verfahren nach Anspruch 1, bei welchem die Interference-Cancellation - Schritte iterativ durchgeführt werden, so dass wenn ein Schlitz gesäubert wird, Einheiten anderer Datenpakete wiederhergestellt werden können, wobei diese Einheiten zur Wiederherstellung anderer Einheiten verwendet werden, die zu dem selben Datenpaket gehören, deren Interferenz aus dem jeweiligen Schlitz entfernt werden kann, wodurch weitere Schlitze gesäubert werden.

3. Verfahren nach einem der Ansprüche 1 oder 2, bei welchem die Einheiten und der Header vor der Übertragung durch einen Bitübertragungsschicht-Fehlerkorrekturcode geschützt werden.

4. Verfahren nach einem der Ansprüche 1-3, bei welchem das Codieren der k Einheiten unter Verwendung eines binären linearen Blockcodes erfolgt, insbesondere eines Hamming-Codes, eines BCH-Codes, eines Reed-Muller-Codes, oder unter Verwendung eines nicht-binären Reed-Solomon-Codes.

5. Verfahren nach einem der Ansprüche 1-4, bei welchem die Codierung unter Verwendung eines (4,2) Codes oder eines (6,4) Codes erfolgt.

6. Verfahren nach einem der Ansprüche 1-5, bei welchem ein Multiple-Access-Frame in 100 oder 400 Schlitze unterteilt wird.

Claims

1. Method of transmitting data, whereby a transmission channel towards an access point is shared among a plurality of users,
the data being transmitted using a multiple-access frame divided in logical slots, the method comprising the following steps:

- dividing each data packet into k units,
- encoding the k units by a (n,k) linear block encoder, producing n-k redundant units,
- transmitting the n units within a multiple-access frame in n different slots according to a time-hopping pattern, a frequency hopping pattern or a combination of both,
- recovering lost or corrupted data packets at the receiver side by using the redundant units by performing the following steps:

    - detecting the presence of a unit for each slot,
    - if a unit is present in a slot and has been transmitted without collisions, recovering this unit,
    - if a sufficient amount $k+\delta$ of units composing a data packet is recovered, a packet level decoder is used to recover the remaining $n-k-\delta$ units which experienced collisions in the respective slots,

the method further comprising the following steps of:

    - removing the interference caused by the $n-k-\delta$ units from the slots where they were transmitted, and
    - recovering units of other data packets which have experienced a collision with the $n-k-\delta$ units,

**characterized in that**

    - the positions of the n units forming a data packet are written into a header attached to each unit,
    - a recovered unit and its header are stored in a memory together with an index of the slot where they have been recovered, and
    - removing the interference caused by the $n-k-\delta$ units using the information about the positions of the units contained in the header of the recovered $k+\delta$ units.

2. The method according to claim 1, whereby the interference cancellation steps are performed iteratively, so that when a slot is cleaned, units of other data packets can be recovered, whereby these units are used to recover other units belonging to the same data packet, whose interference can be removed from the respective slot, thereby cleaning further slots.

3. The method according to one of claims 1 or 2, whereby the units and the header are protected before transmission by a physical layer error correction code.

4. The method according to one of claims 1 - 3, whereby the encoding of the k units is performed using a binary linear block code, in particular a Hamming Code, a BCH Code, a Reed Muller Code or by using a non-binary Reed Solomon Code.

5. The method according to one of claims 1 - 4, whereby encoding is performed by using a (4,2) code or a (6,4) code.

6. The method according to one of claims 1 - 5, whereby a multiple access frame is divided into 100 or 400 slots.

**Revendications**

1. Procédé de transmission de données dans lequel un canal de transmission est utilisé en commun par plusieurs utilisateurs en un point d'accès, dans lequel
l'on transmet les données en utilisant une trame à accès multiple partagées en fenêtres logiques, le procédé comportant les étapes suivantes consistant à :

    - partager chaque paquet de données en k unités,
    - encoder les k unités au moyen d'un encodeur de bloc linéaire (n,k) de manière à générer n-k unités redondantes,
    - transmettre les n unités à l'intérieur d'une trame à accès multiple dans n fenêtres différentes conformément à un modèle de modulation à créneau de durée, un modèle de modulation à saut de fréquence ou une combinaison de ceux-ci,
    - reconstituer des paquets de données perdus ou endommagés du côté du récepteur en utilisant les unités redondantes via les étapes suivantes consistant à :

        - constater la présence d'une unité pour chaque fenêtre,
        - dans le cas où une unité est présente dans une fenêtre et a été transmise sans collision, reconstituer cette unité,
        - lorsqu'un nombre suffisant de $k+\delta$ unités formant un paquet de données a été récupéré, utiliser un décodeur de niveau de paquet pour reconstituer les n-k-$\delta$ unités restantes qui ont subi des collisions dans les fenêtres respectives,

le procédé comportant en outre les étapes consistant à :

- supprimer les interférences, générées par les n-k-$\delta$ unités, des fenêtres dans lesquelles elles ont été transmises, et
- reconstituer des unités d'autres paquets qui ont subi une collision avec les n-k-$\delta$ unités,
**caractérisé en ce que**
- les positions des n unités formant un paquet de données sont écrites dans un en-tête ajouté à chaque unité,
- une unité reconstituée et son en-tête sont mémorisés dans une mémoire conjointement avec un index de la fenêtre dans laquelle elle a été reconstituée, et
- la suppression des interférences générées par les n-k-$\delta$ unités est effectuée en utilisant les informations sur les positions des unités qui sont contenues dans l'en-tête des k+$\delta$ unités reconstituées.

2. Procédé selon la revendication 1, dans lequel les étapes de suppression des interférences sont réalisées de façon itérative de sorte que, lorsque l'on nettoie une fenêtre, on peut reconstituer des unités d'autres paquets de données, ces unités étant utilisées pour reconstituer d'autres unités qui appartiennent au même paquet de données et dont l'interférence peut être supprimée de la fenêtre respective de manière à nettoyer d'autres fenêtres.

3. Procédé selon l'une des revendications 1 ou 2, dans lequel les unités et l'en-tête sont protégés contre la transmission par un code de correction d'erreur de couche de transmission de bits.

4. Procédé selon l'une des revendications 1 à 3, dans lequel l'encodage des k unités est effectué en utilisant un code de bloc linéaire binaire, notamment un code de Hamming, un code de BCH, un code de Reed-Muller, ou en utilisant un code de Reed-Salomon non binaire.

5. Procédé selon l'une des revendications 1 à 4, dans lequel l'encodage est effectué en utilisant un code (4,2) ou un code (6,4).

6. Procédé selon l'une des revendications 1 à 5, dans lequel une trame à accès multiple est divisée en 100 ou 400 fenêtres.

**Fig.1**

**Fig.2**

EP 2 315 382 B1

Fig.3

11

Gate way

Frame, Tf
= Ns Schlitze

Schlitz, Ts

ACK

ACK

ACK

Zeit

User 1    User 2    User 3

**Fig.4**

**Fig.5**

Fig.6

Frame, $T_F$ Sekunden, $N_{CSA} = kN_{SA}$ Schlitze

Schlitz, $T_{CSA}$ Sekunden

User 1

User 2

User 3

⋮

User M

Paritätseinheit

1 2 3 4 5 6 7 8 9 10 11 12 13 14

**Fig.7**

**Fig.8**

Fig.9

Fig.10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **E. CASINI ; R.D. GAUDENZI ; O.D.R.HERRERO.** Contention resolution diversity slotted aloha (crdsa): An enhanced random access scheme for satellite access packet networks. *IEEE Transactions on Wireless Communications,* April 2007, vol. 6, 1408-1419
- **A. W. LAM ; D. V. SARWATE.** Time-Hopping and Frequency-Hopping Multiple-Access Packet Communications. *IEEE Transactions on Communications,* Juni 1990, vol. 38 (6), 875-888

- Contention Resolution Diversity Slotted ALOHA (CRSDSA): An Enhanced Random Access Scheme for Satellite Access Packet Networks. **ENRICO CASINI et al.** IEEE TRANSACTIONS ON WIRELESS COMMUNICATIONS. IEEE SERVICE CENTER, 01. April 2007, vol. 6, 1408-1419